(19) Europäisches Patentamt
European Patent Office
Office européen des brevets

(11) **EP 4 134 623 A1**

(12) **EUROPEAN PATENT APPLICATION**

(43) Date of publication:
**15.02.2023 Bulletin 2023/07**

(21) Application number: **21386049.7**

(22) Date of filing: **11.08.2021**

(51) International Patent Classification (IPC):
**G01C 21/00** (1968.09) **G01S 17/04** (2020.01)
**G01S 17/86** (2020.01) **G01S 17/89** (1995.01)

(52) Cooperative Patent Classification (CPC):
**G01C 21/005; G01C 21/3804; G01S 17/04;**
**G01S 17/86; G01S 17/89**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Astemo, Ltd.**
**Hitachinaka-shi Ibaraki 312-8503 (JP)**

(72) Inventors:
• **Souflas, Ioannis**
  **London, EC2Y 5AJ (GB)**

• **Fernandez-Moral, Eduardo**
  **06560 Valbonne (FR)**
• **Ohazulike, Anthony Emeka**
  **06560 Valbonne (FR)**
• **Nguyen, Quan**
  **06560 Valbonne (FR)**
• **Songur, Noyan**
  **London, EC2Y 5AJ (GB)**

(74) Representative: **Mewburn Ellis LLP**
**Aurora Building**
**Counterslip**
**Bristol BS1 6BX (GB)**

(54) **DRIVE DEVICE, VEHICLE, AND METHOD FOR AUTOMATED DRIVING AND/OR ASSISTED DRIVING**

(57)    This invention refers to a vehicle, comprising a drivable road detection part (32) is configured to receive map data from a storage device (33) and localization data from a localization device (22), and to create a first occupancy grid, each cell of which represents a first confidence of surrounding environment being drivable, based on the map data and/or localization data, an optical sensor based drivable road detection part (32c) configured to receive image data from an optical sensing device (20) and to create a second occupancy grid, each cell of which represents a second confidence of surrounding environment being drivable, based on the image data, and a fusing part (32d) configured to create a third occupancy grid, each cell of which represents a third confidence of surrounding environment being drivable, by fusing the first occupancy grid and the second occupancy grid.

Fig. 3

**Description**

The invention refers a drive device for automated driving and/or assisted driving of a vehicle, comprising a storage device configured to store map data, a localization input port configured to receive localization data of the vehicle, and an optical input port configured to receive image data and/or geometric data indicating a surrounding of the vehicle.

The invention further relates to a vehicle comprising a storage device configured to store map data, a localization device configured to output localization data of the vehicle, and an optical sensing device configured to output image data and/or geometric data indicating a surrounding of the vehicle.

The invention also refers to a computer-implemented method for driving a vehicle in an automated mode and/or driving assistance mode, comprising the steps of: generating localization data of the vehicle using a localization device, generating image data and/or geometric data indicating a surrounding of the vehicle using an optical sensing device, and receiving map data from a storage device and the localization data from the localisation device.

Vehicles operating in an autonomous mode (e.g., driverless) or semi-autonomous mode (using driving assistance) free the driver from some driving-related tasks. When operating in an autonomous mode, the vehicle can navigate to various locations, allowing the vehicle to travel with minimal human interaction or in some cases without any passengers. Similarly, in an assisted driving mode, some tasks of the driver are executed by driver-assistance systems.

An autonomously or semi-autonomously driving vehicle is typically navigated based on routes provided by a route and map service. The configuration of roads and lanes within a road is critical when planning a path for the vehicle. Thus, the accuracy of the map is very important. However, in some instances, a boundary of a road can be different from the one obtained from the map due to a variety of factors, such as, for example, map creation errors, damages to the road, or new construction of the road. Such a discrepancy of the roads from the map and the actual road condition may cause errors in planning and controlling the vehicle.

US 2019/0078896 A1 discloses a data driven map updating system for autonomous driving vehicles. US 2017/0297571 A1 refers to a method and arrangement for monitoring and adapting the performance of a fusion system of an autonomous vehicle. US 2019/0384304 A1 discloses a path detection for autonomous machines using deep neural networks. US 2020/0160068 A1 refers to automatically detecting unmapped drivable road surfaces for autonomous vehicles. US 2016/0061612 A1 discloses an apparatus and a method for recognizing driving environment for autonomous vehicle. US 2020/0183011 A1 refers to a method for creating occupancy grid map.

An objective of the invention is to provide a drive device, a vehicle, and computer-implemented method for predicting drivable road boundaries to be able to plan a safe and comfortable path.

This objective is solved by the subject matter of the independent claims. The dependent claims describe preferred embodiments of the invention.

A drive device for automated driving and/or assisted driving of a vehicle comprises a storage device configured to store map data, a localization input port configured to receive localization data of the vehicle, an optical input port configured to receive image data and/or geometric data indicating a surrounding of the vehicle, and a drivable road detection part. The drivable road detection part includes a map based drivable road detection part, an optical sensor based drivable road detection, and a fusing part. The map based drivable road detection part is configured to receive the map data from the storage device and the localization data from the localization input port. The map based drivable road detection part is further configured to create a first occupancy grid, each cell of which represents a first confidence of surrounding environment being drivable, based on the map data and/or localization data. The optical sensor based drivable road detection part is configured to receive the image data and/or the geometric data from the optical input port and to create a second occupancy grid, each cell of which represents a second confidence of surrounding environment being drivable, based on the image data and/or the geometric data. The fusing part is configured to create a third occupancy grid, each cell of which represents a third confidence of surrounding environment being drivable, by fusing the first occupancy grid and the second occupancy grid.

Optionally, the drive device includes a control part configured to generate driving signals for automated driving and/or assisted driving based on the third occupancy grid, the driving signals being output to the vehicle for control purposes.

A vehicle comprises a storage device configured to store map data, a localization device configured to output localization data of the vehicle, an optical sensing device configured to output image data and/or geometric data indicating a surrounding of the vehicle, and a drivable road detection part which includes a map based drivable road detection part, an optical sensor based drivable road detection part, and a fusing part. The map based drivable road detection part that is configured to receive the map data from the storage device and the localization data from the localization device. The map based drivable road detection part is further configured to create a first occupancy grid, each cell of which represents a first confidence of surrounding environment being drivable, based on the map data and/or localization data. The optical sensor based drivable road detection part is configured to receive the image data and/or the geometric data from the optical sensing device and to create a second occupancy grid, each cell of which represents a second confidence of surrounding environment being drivable, based on the image data and/or the geometric data. The fusing part is configured to create a third occupancy grid, each cell of which represents a third confidence of surrounding environment being drivable, by fusing the first occupancy grid and the second occupancy grid.

Optionally, the vehicle includes a control part configured to drive the vehicle in an automated driving mode and/or assisted driving mode based on the third occupancy grid.

The invention is based on the general technical idea to fuse real-time AI (artificial intelligence) and map-based approaches to increase the precision, the accuracy, redundancy, and/or safety of drivable road identification systems. In other words, a system for redundant/reliable recognition of drivable road is provided which comprises a unit for fusing information from high-definition lane map data and data generated by real-time semantic segmentation of drivable road of data relating to the surrounding of the vehicle. The invention can predict drivable road with high precision and high accuracy.

The vehicle and/or the drive device for the vehicle may be an autonomous or self-driving vehicle which is sometimes called a robo-car. Alternatively or additionally, the vehicle and/or the drive device may be a semi-autonomous vehicle. Thus, the drive device may be considered a controller of an advanced driver-assistance system. Autonomous vehicles may be considered level 4 or level 5 and semi-autonomous or assisted driving vehicles may be considered level 1 to level 3 according to a classification system with six levels as published in 2021 by SAE International, an automotive standardization body, as J3016_202104, Taxonomy and Definitions for Terms Related to Driving Automation Systems for On-Road Motor Vehicles.

The vehicle can be any kind of self-propelled automobile and is preferably configured to drive on a road. For example, the vehicle comprises an engine and/or an electric motor for driving wheels of the vehicle. However, the invention is not limited to vehicles driving on the ground. The vehicle can be a maritime vehicle such as a boat or a ship. In general, the invention refers to a vehicle that needs to be navigated in routes/lanes in real time while avoiding obstacles.

The storage device may include one or more memories which can be implemented via multiple memory devices to provide for a given amount of memory. The storage device may include one or more volatile storage (or memory) devices such as random-access memory (RAM), dynamic RAM (DRAM), synchronous DRAM (SDRAM), static RAM (SRAM), or other types of storage devices. The storage device may also include a solid-state device (SSD). However in other embodiments, the storage device may include a hard disk drive (HDD) with or without a smaller amount of SSD storage to act as an SSD cache to enable non-volatile storage of context state and other such information during power down events so that a fast power up can occur on re-initiation of system activities.

The storage device can be configured to store all types of information or types of map data. Map data are data from which a map of the surroundings of the vehicle can be reconstructed. The map data can be periodically or intermittently updated. To this end, the storage device may be electronically connected or coupled to a communication part which allows wired or wireless communication with a network and, thus, with servers, with other types of storage devices external to the vehicle, and/or with other vehicles.

The communication part may be considered a network interface device which can include a wireless transceiver and/or a network interface card (NIC). The wireless transceiver may be a WiFi transceiver, an infrared transceiver, a Bluetooth transceiver, a WiMax transceiver, a wireless cellular telephony transceiver, or other radio frequency (RF) transceivers, or a combination thereof.

The localization device may be a satellite transceiver (e.g., a global positioning system (GPS) transceiver) for determining the current position of the vehicle. The localization device may include a Visual Positioning System (VPS) that analyses images of the surroundings and compare the image to data bank images to determine the position of the user taking the images. The current position of the vehicle is processed and/or output as localization data of the vehicle by the localization device. Thus, the current position of the vehicle can be determined based on the localization data. In other words, the localization data include information indicative of the current position of the vehicle.

The optical sensing device may use electromagnetic radiation in various wavelength ranges, such as a visible wavelength range and/or a radiofrequency wavelength range (RF), to sense and/or probe the surroundings of the vehicle. The optical sensing device unit may be configured to detect and/or emit electromagnetic radiation in a single wavelength range or a plurality of wavelength ranges. The optical sensing device may be sensor unit for detecting and/or emitting electromagnetic radiation using optical means.

The optical sensing device may include sensors with which the surroundings of the vehicle can be determined in three dimensions. The optical sensing device may include multiple sensors for extending the field of view by adding/combing the data generated by the multiple sensors. For example, the optical sensing device may include a mono camera and/or stereo camera, i.e. two cameras which are spaced apart from each other to obtain a stereo image of the surroundings of the vehicle. The cameras may be still cameras and/or video cameras. A camera may be mechanically movable, for example, by mounting the camera on a rotating and/or tilting a platform. The camera can generate image data.

However, other imaging or scanning techniques using electromagnetic radiation may be used and, thus, form a part of the optical sensing device. The optical sensing device may alternatively or additionally include a radar device and/or a light detection and range (LIDAR) device. The LIDAR device may sense objects in the surroundings of the vehicle using lasers. The LIDAR device can include one or more laser sources, a laser scanner, and one or more detectors, among other system components. The radar device can be a system that utilizes radio signals to sense objects within the local environment of the vehicle. In some embodiments, in addition to sensing objects, radar unit may additionally sense the speed and/or heading of the other objects, such as other vehicles on the road. The LIDAR device and/or the radar device can generate geometric data.

The map based drivable road detection part is electronically and/or communicatively connected or coupled to the storage device and/or the localization device. The map based drivable road detection part is configured to receive the map data from the storage device and/or the localization data from the localization device. The drivable road detection part, the map based drivable road detection part, optical sensor based drivable road detection part, and/or the fusing part may be part of a computer or processor which performs the tasks outlined below. The computer includes the necessary hardware (e.g., processor(s), memory, storage) and software (e.g., operating system, programs) to execute the tasks outlined below.

The map based drivable road detection part is configured to generate, create, and/or compute a grid representing the surroundings of the vehicle based on the map data and the localization data. Thus, the map based drivable road detection part processes the map data and the localization data. The localization data indicates at which point the vehicle is positioned within the map represented by the map data. The grid depicts the surroundings of the vehicle.

The grid may be a first occupancy grid having or be comprised of a plurality of cells. Each cell corresponds to a respective area of the surrounding of the vehicle. Each cell of the grid is associated with a first confidence which indicates how likely the area represented by the cell is drivable. The confidence may be considered a confidence level. The combination of the grid and the respective confidence or confidence level for each cell may be considered the first occupancy grid. When the vehicle is moving, the map based drivable road detection part is required to update the first occupancy grid since the position of the vehicle changes such that the localization data changes.

The first and second occupancy grids can be a representation of the surroundings of the vehicle and include a plurality of cells each of which are associated with a respective confidence of the surrounding environment being drivable. Thus, the confidence includes information whether the area corresponding to the respective cell of the grid is occupied since the non-occupancy of an area in the real-world is the precondition that this area can be drivable. The confidence can be a value between a minimum value (for example 0 or 0%) and a maximum value (for example 1 or 100%)

The higher the confidence of each cell is the higher is the likelihood that the area corresponding to the respective cell of the grid is drivable. For example, a confidence of zero indicates that the area corresponding to the respective cell is not drivable while a confidence of 1 indicates that the respective area in the real world is certain to be drivable.

The optical sensor based drivable road detection part may be part of the drivable road detection part and can be electronically and/or communicatively connected or coupled to the optical sensing device such that it can receive the image data and/or the geometric data. The optical sensor based drivable road detection part may be part of the computer as described above. The optical sensor based drivable road detection part is configured to generate, create, and/or compute a grid representing the surroundings of the vehicle based on the image data and/or the geometric data. Similar to the grid generated by the map based drivable road detection part, the grid includes a plurality of cells which represent a corresponding area in the real world. Each cell of the grid is associated with a second confidence which indicates whether the area represented by the cell is drivable or not. The combination of the grid and the respective confidence for each cell may be considered the second occupancy grid.

The optical sensor based drivable road detection part may include a deep learning solution (e.g., using a deep neural network (DNN), such as a convolutional neural network(CNN)). The neural network or artificial intelligence (AI) is used to identify the drivable road or the parts of the surroundings of the vehicle that are drivable based on the image data and/or geometric data. The optical sensor based drivable road detection part may be configured to identify other vehicles or objects on the road. These functionalities of the optical sensor based drivable road detection part may be trained.

The second confidence may be computed or otherwise generated based on the characteristics or capabilities of the neural network to identify drivable road. For example, when the image data is perceived to be of minor quality such as when the vehicle is surrounded by fog or other environmental conditions which reduce the quality of the image data, the optical sensor based drivable road detection part is configured to reduce the confidence for the respective cells. However, other criteria for assessing the confidence of the identification of drivable road may be applied.

The grid generated from the image data and/or geometric data may be comprised of a plurality of cells. Each cell corresponds to a respective area of the surrounding of the vehicle. Each cell of the grid is associated with the second confidence (by the methods described above) which indicates how likely the area represented by the cell is drivable. The combination of the grid and the respective confidence for each cell may be considered the second occupancy grid. When the vehicle is moving, the optical sensor based drivable road detection part is required to update the second occupancy grid since the position of the vehicle changes such that the image data and/or the geometric data changes.

The fusing part may be a part of the drivable road detection part and may be electronically and/or communicatively connected or coupled to the map based drivable road detection part and the optical sensor based drivable road detection part in order to receive the first occupancy grid and a second occupancy grid. The fusing part may be a section or functional unit of the computer described above.

The fusing part is configured to fuse the first occupancy grid and a second occupancy grid in order to create a new third occupancy grid. This fusion process corresponds to a processing of the first occupancy grid and the second occupancy grid. In particular, the first confidence of each cell of the first occupancy grid can be associated and then fused with the second confidence of the corresponding cell of the second occupancy grid. However, the fusion step is not limited thereto. The first confidence of each cell of the first occupancy grid can be associated and then fused with the second confidences of a plurality of corresponding cells of the second occupancy grid or vice versa. It is also possible that the first confidences or first confidence levels of a plurality of cells of the first occupancy grid is associated and then fused with the second confidences or second confidence levels of a plurality of corresponding cells of the second occupancy grid. The fusion process may have an initial stage for the alignment of the first and second occupancy grids. For example, it might be beneficial to align the occupancy grid spatially. This will be described below in more detail.

The third confidence or third confidence level can be a (mathematical) function of the first confidence level(s) and the second confidence level(s). The third confidence is thus based on the information of the first confidence and the second confidence. The fusion process may be done for each cell separately or by combining/fusing the first occupancy grid and the second occupancy grid.

The third occupancy grid thus includes information which is based on the map data and the localization data as well as from the image data and/or geometric data. Since more information is used for generating the third occupancy grid, the prediction of drivable road is more likely to be accurate and precise.

The control part is not essential for the invention. The control part can be implemented by a known control part for autonomously or semi-autonomously driving the vehicle. The invention can be regarded in providing the information/data based on which the control part operates.

The control part can be electronically and/or communicatively connected or coupled to the fusing part in order to receive the third occupancy grid. The control part may be a section or functional unit of the computer described above. The control part is configured to generate signals for controlling a steering device, a throttle device (also referred to as an acceleration device), and a braking device for driving the vehicle on the drivable road. The steering device, the throttle device, and the braking device may be part of a control device for (mechanically) navigating the vehicle.

The steering device can be part of the vehicle to adjust the direction or heading of the vehicle. The throttle device may also be a part of the vehicle to control the speed of the motor or engine that in turn control the speed and acceleration of the vehicle. The braking device can be part of the vehicle to decelerate the vehicle by providing friction to slow the wheels or tires of the vehicle. The steering device, the throttle device and the breaking device may be controlled based on the signals output by the control part.

The control part may execute algorithms and/or include a neural network (AI) for navigating the vehicle based on the information on the drivable road (the third occupancy grid).

The drive device may be part of the vehicle and is electronically and/or communicatively connected or coupled to the localization device and the optical sensing device by the localization input port and the optical input port, respectively. In other words, the localization device outputs localization data which are input to the drive device via the localization input port and the optical sensing device outputs image data and/or geometric data that are input into the drive device via the optical input port. The map based drivable road detection part is electronically connected to or coupled to the localization input port. The optical sensor based drivable road detection part is electronically and/or communicatively connected or coupled to the optical input port.

In an optional embodiment, the map based drivable road detection part is configured to create the first confidence calculated based on a localization accuracy of the localization data and an update date of the map data. Optionally, the optical sensor based drivable road detection part is configured to create the second confidence based on an uncertainty of processing a semantic segmentation of the image data.

The map based drivable road detection part may include a functionality to determine the accuracy of the localization of the vehicle. For example, the signal strength of the GPS signal, the number of satellites from which GPS signals are received, and/or other characteristics may be used for determining the accuracy of the localization or position of the vehicle. The map based drivable road detection part may combine the information on the position of the vehicle determined using GPS or a global navigation satellite system (GNSS) with data from an inertial measurement unit (IMU) to increase the accuracy of the localization data. The map based drivable road detection part may include a processing system and/or functionalities to calculate or compute a confidence based on the accuracy of the localization. For example, the map based drivable road detection part includes a (mathematical) function which links the first confidence to the localization accuracy.

The first confidence may also be based on the update date of the map data. For example, the first confidence may be the smaller, the more the time span to the last update increases. In other words, the older the map version is the less likely the map data is accurate. For example, the more time that has passed between the last update and the calculation of the first confidence, the less likely the map data is accurate. Another reason that the map data are not up to date could be semantic information e.g. separate labels for drivable road, pavement, lines etc. Thus, the first confidence needs to be lower compared to a situation in which the map data is up to date. For example, the map based drivable road detection part includes a (mathematical) function which links the first confidence to the time span that has passed since the last update of the map data.

The optical sensor based drivable road detection part may include a functionality to determine the second confidence in view of the uncertainty of processing a semantic segmentation of the image data and/or geometric data. For example, the optical sensor based drivable road detection part calculates or computes the second confidence based of the uncertainty of processing a semantic segmentation of the image data. The optical sensor based drivable road detection part may include a (mathematical) function which links the second confidence to the uncertainty of processing a semantic segmentation of the image data. The semantic information may refer to a drivable road, a pavement, a vehicle, and/or other information about the surrounding of the vehicle.

The uncertainty of the processing of a semantic segmentation of the image data may be determined by the optical sensor based drivable road detection part. To this end, the optical sensor based drivable road detection part may include statistics or other types of information which indicate the uncertainty of the processing of the semantic segmentation of the image data. For example, the statistics or other type information may be gathered by simulating the process of the semantic segmentation of the image data from which the uncertainty of the processing can be determined.

In an optional embodiment, a first resolution of the first occupancy grid is different from a second resolution of the second occupancy grid, wherein optionally the fusing part further includes a grid resolution updating part that is configured to modify the lower one of the first or the second occupancy grids so as to match the resolution of the higher one of the first and second occupancy grids, and wherein further optionally the fusing part is configured to fuse the first and second occupancy grids modified by the grid resolution updating part.

The first resolution may be determined by the coarseness of the map data. The coarseness of the map data determines the resolution of the grid. For example, the resolution of the grid which may corresponds to the size of each cell (or in other words, the area which each cell covers in the real world) may be determined by the number of data points per unit area.

The second resolution may be determined by the resolution of the optical sensing device. For example, the pixel resolution of the camera of the optical sensor device may determine the resolution of the image of the surroundings and, thus, the coarseness of the image data and/or geometric data. The coarseness of the image data and/or geometric data may determine the size of the unit cell and, thus, the area in the real world that corresponds to the unit cell. In other words, the area in the real world which corresponds to one pixel is equal to the second resolution. Similar arguments apply for the resolutions of the optical sensing device if it includes LIDAR or radar.

In addition, the second resolution depends on the distance of a real-world object from the camera. The further away the object is from the camera, the little number of pixels is required to image the object. Thus, the second resolution may vary due to the movement of the vehicle. Consequently, the first resolution is usually different to the second resolution.

The grid resolution updating part may be a section or functional unit of the computer described above. The grid resolution updating part may be provided in order to align or match the first resolution to the second resolution or vice versa. The grid resolution updating part may change to resolution of the first resolution and the second resolution which has the lower resolution.

The modification of the first resolution or the second resolution may be done by interpolating, averaging, and/or other mathematical methods for increasing the resolution of a grid. The fusion possibly consists of applying a discrete Gaussian averaging of the inputs. For example, the cells are divided in a plurality of sub-cells to increase the resolution. The number of sub-cells is chosen to match with the number of cells of the occupancy grid having the higher resolution. The confidence of the sub-cells may have the values of the previous cell, average values between the adjacent cells, and/or are interpolated such that there is a smooth transition from one adjacent cell to the sub-cell, between the sub-cells and from the sub-cell to another adjacent cell. One of the ways to modify confidence would be based on their proximity to the other cells, for example the value of the resulting cells is defined by the value of the surrounding cells; this is an example for interpolation.

The fusing part may fuse the first and second occupancy grids based on the modified resolution. This allows to match each cell from the first occupancy grid to the corresponding cell of the second occupancy grid.

In an optional embodiment, the first resolution of the first occupancy grid is lower than the second resolution of the second occupancy grid, and wherein optionally the grid resolution updating part is configured to modify the first resolution of the first occupancy grid so as to match the second resolution of the second occupancy grid.

Due to the high resolution of the optical sensing device, the coarseness of the map data results in a lower resolution of the first occupancy grid compared to the second occupancy group. In this case, the grid resolution updating part increases the resolution of the first occupancy grid as described above. After this step, the resolution of the first occupancy grid matches the resolution of the second occupancy grid. Thus, the fusing part can fuse each cell of the first occupancy grid with the corresponding cell of the second occupancy grid.

The grid resolution updating part may be summarized as part which is configured to modify the first occupancy grid and the second occupancy grid in such a way that each cell of the first occupancy grid has a corresponding cell having the same size and/or position in the second occupancy grid. To this end, the grid resolution updating part may add, delete, and/or divide cells in the first occupancy grid and/or the second occupancy grid. Optionally, the deletion of cells is done for aligning the dimensions of the occupancy grid having the greater dimensions to the occupancy grid having the lower dimension. For example, the second occupancy grid includes a dimension which is determined by the area the optical sensing device can image. This area is usually smaller than the area covered by the map data. Thus, the grid resolution updating part may crop the first occupancy grid and/or the map data such that the first occupancy grid matches the second occupancy grid. This may be done by deleting cells from the first occupancy grid which do not have corresponding cells in the second occupancy grid.

In an optional embodiment, missing values of the first and second confidences are set between a maximum value of the first and second confidences and a minimum value of the first and second confidences, and wherein optionally the fusing part further includes a dealing part configured to set the first or second missing confidence value to a predetermined value between the maximum value and the minimum value.

The map data, the image data and/or geometric data may miss certain data points which would be required to completely the cover the first occupancy grid and the second occupancy grid, respectively. These missing data points can be considered missing values of the first and/or second confidences. Thus, "missing values" may refer to missing entries in the first occupancy grid and/or the second occupancy grid. In other words, a cell of the first occupancy grid and/or the second occupancy grid may not be associated with a respective confidence.

Alternatively, the first occupancy grid and the second occupancy grid are complete however, some cells of the occupancy grids may lack the confidence. In both cases, values of the first and second confidences are missing. These missing values may be due to measuring artefacts and/or other inconsistencies when obtaining and/or processing of the image data, the geometric data and/or the map data.

The dealing part may fill in these missing values. The dealing part may be a section or functional unit of the computer described above. The dealing part may be configured to set the missing values between a maximum value and a minimum value of the confidence. For example, the maximum value and the minimum value refer to the boundaries of the possible confidence range; the maximum value may be one and/or the minimum value may be zero. The maximum value and the minimum value could be the confidence of nearby grids, or average of the confidence of surrounding grids.

The dealing part may be programmed to set the missing values in an adaptive manner, i.e. depending on the situation. However, in a preferred embodiment, the dealing part is configured to set the missing values of the first and/or second confidences to a predetermined value. This predetermined value may be set in advanced in view of the usual or expected values of the missing confidences. The dealing part may be configured to set a predetermined value for the first missing confidence value and a different predetermined value for the second missing confidence value.

In an optional embodiment, the predetermined value is an average of the maximum value and the minimum value. The dealing part may set the missing value to a fixed value which is the average of the maximum value and the minimum value, for example 0.5.

In an optional embodiment, the fusing part is configured to create the third occupancy grid by computing the average of the first and second confidences.

In this embodiment, the fusion of the first occupancy grid and the second occupancy grid is done by calculating the average of the confidence of a particular cell of the first occupancy grid and of the confidence of a corresponding cell of the second occupancy grid. This means, the third or fused confidence of a particular real-world area (corresponding to a cell of the third occupancy grid) is the average value of the first confidence of the same real-world area (corresponding to the corresponding cell of the first occupancy grid) and of the second confidence of the same real-world area (corresponding to the corresponding cell of the second occupancy grid). In other words, the third occupancy grid is achieved by averaging the first and second confidences of respective cells of the first and second occupancy groups, respectively. This fusion method requires little computation effort and, therefore, be calculated in a short time period. This fusion approach may be considered deterministic.

In an alternative and/or additional optional embodiment, the fusing part is configured to create the third occupancy grid by using Bayes rule, and wherein optionally the drivable road detection part further includes a likelihood computing part that is configured to compute a likelihood of the second confidence being true by using map-matching algorithm with the first occupancy grid. This fusion approach may be considered probabilistic.

Bayes' rule (alternatively Bayes' law or Bayes' theorem) describes the probability of an event, based on prior knowledge of conditions that might be related to the event. Here, the likelihood $p(M_{x,y}|AI_{x,y})$ that the road is drivable depends on the likelihood $p(M_{x,y})$ that the road is drivable based on the map data (first confidence or first confidence level), the likelihood $p(AI_{x,y})$ that the road is drivable based on the image data and/or the geometric data (second confidence or second confidence level), and the likelihood $p(AI_{x,y}|M_{x,y})$ how true the second confidence level (likelihood $p(AI_{x,y})$) is given the initial belief or first confidence level (likelihood $p(M_{x,y})$). The indices $x,y$ denote the individual cell indices of the cells M of the first occupancy grid and of the cells AI of the second occupancy grid. In details, these likelihoods are linked by the following formula:

$$p\left(M_{x,y}\middle|AI_{x,y}\right) = \frac{p\left(AI_{x,y}\middle|M_{x,y}\right)p\left(M_{x,y}\right)}{p\left(AI_{x,y}\right)}$$

The likelihood $p(AI_{x,y} \mid M_{x,y})$ is calculated/computed using the likelihood computing part which can be a section or a functional unit of the computer described above. The likelihood computing part may be configured to execute well known map matching algorithms such as Iterative Closest Point (ICP) and Normal Distributions Transform (NDT). ICP is an algorithm employed to minimize the difference between two clouds of points. With NDT, a normal distribution is assigned to each cell, which locally models the probability of measuring a point. The result of the transform is a piecewise continuous and differentiable probability density. ICP and NCP are known to the skilled person such that further descriptions of these transform techniques are moot. The likelihood $p(AI_{x,y} \mid M_{x,y})$ is inversely proportional to the uncertainty of the map-matching results. The uncertainty could be estimated from the covariance matrix of the map-matching algorithm..

The storage device, the localization device, the drive part, the drivable road detection part, the map based drivable road detection part, the optical sensor based drivable road detection part, the fusing part, the control part, the grid resolution updating part, the dealing part, and/or the likelihood computing part may be communicatively and/or electronically coupled to each other via an interconnect, a network, a bus, and/or a combination thereof. For example, these components may be coupled to each other via a controller area network (CAN) bus. A CAN bus is a vehicle bus standard designed to allow microcontrollers and devices to communicate with each other in applications without a host computer.

A computer-implemented method for driving a vehicle in an automated mode and/or driving assistance mode, comprises the steps of:

a) generating localization data of the vehicle using a localization device,
b) generating image data and/or geometric data of the vehicle surroundings using an optical sensing device,
c) receiving, by a drivable road detection part, map data from a storage device and the localization data from the localisation device, and creating a first occupancy grid, each cell of which represents a first confidence of surrounding environment being drivable, based on the map data and/or localization data,
d) receiving, by an optical sensor based drivable road detection part, the image data and/or the geometric data from the optical sensing device and creating a second occupancy grid, each cell of which represents a second confidence of surrounding environment being drivable, based on the image data and/or the geometric data, and
e) creating, by a fusing part, a third occupancy grid, each cell of which represents a third confidence of surrounding environment being drivable, by fusing the first occupancy grid and the second occupancy grid.

Optionally, the method additionally includes the step of driving, by a control part, the vehicle based on the third occupancy grid.

The above comments, remarks and optional embodiments of the drive device and the vehicle equally apply to the computer-implemented method for driving a vehicle in an automated mode and/or driving assistance mode. The method may be executed by a computer which executes the functionalities of the drivable road detection part, the optical sensor based drivable road detection part, the fusing part, and/or the control part.

In an optional embodiment, the step of creating the first occupancy grid includes creating the first confidence calculated based on a localization accuracy of the localization data and an update date of the map data, and wherein optionally the step of creating the second occupancy grid includes creating the second confidence calculated based on an uncertainty of processing a semantic segmentation of the image data.

In an optional embodiment, a first resolution of the first occupancy grid is different from a second resolution of the second occupancy grid, wherein optionally the step of creating a third occupancy grid includes modifying the lower one of the first or the second occupancy grids so as to match the resolution of the higher one of the first and second occupancy grids using a grid resolution updating part, and wherein further optionally the step of creating a third occupancy grid further includes fusing the first and second occupancy grids modified by the grid resolution updating part.

In an optional embodiment, the first resolution of the first occupancy grid is lower than the second resolution of the second occupancy grid, and wherein optionally the step of creating a third occupancy grid includes modifying the first resolution of the first occupancy grid so as to match the second resolution of the second occupancy grid.

In an optional embodiment, missing values of the first and second confidences are set between a maximum value and a minimum value, and wherein optionally the step of creating a third occupancy grid further includes setting the first or second missing confidence values to a predetermined value between the maximum value and the minimum value.

In an optional embodiment, the predetermined value is an average of the maximum value and the minimum value.

In an optional embodiment, the step of creating a third occupancy grid further includes creating the third occupancy grid by computing the average of the first and second confidences.

In an optional embodiment, the step of creating a third occupancy grid further includes creating the third occupancy grid by using Bayes rule, and wherein optionally the step of creating a first occupancy grid further includes computing a likelihood of the second confidence being true by using map-matching algorithm with the first occupancy grid.

The invention further refers to a computer program comprising instructions which, when the program is executed by a computer, cause the computer to carry out the steps of the method describe above.

The invention also refers to a computer-readable storage medium comprising instructions which, when executed by a computer, cause the computer to carry out the steps of the method described above.

Optional embodiments of the invention will be discussed in conjunction with the accompanying drawings. Therein,

Fig. 1          shows a block diagram of an interconnected vehicle;
Fig. 2          shows a block diagram of a drive device of the vehicle according to Fig. 1;
Fig. 3          shows a flow diagram illustrating the basic functionalities of the drive device according to Fig. 2; and
Fig. 4a to 4c     show a flow diagram illustrating steps executed by the drive device according to Fig. 2.

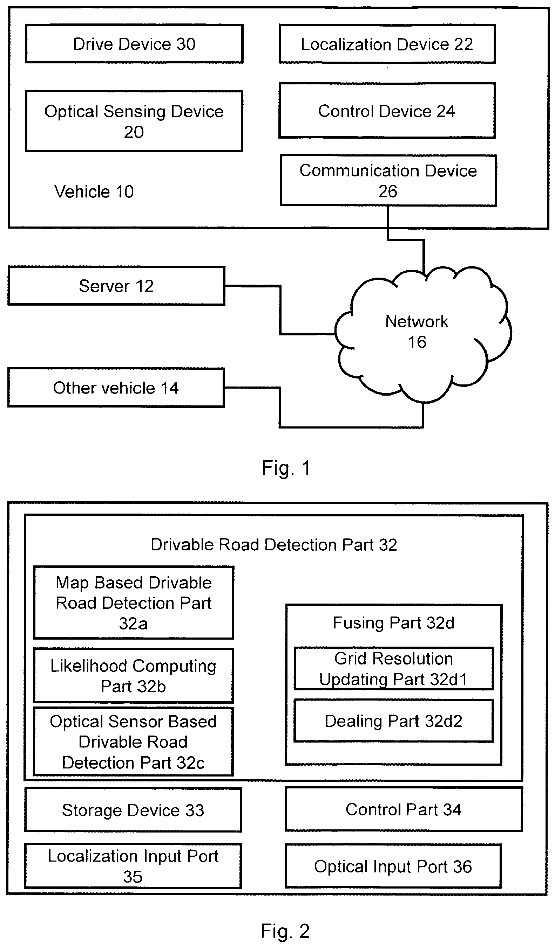

Fig. 1 shows a vehicle 10 which is electronically connected to a server 12 and to one or more other vehicles 14 by a network 16. The vehicle 10 can be any kind of self-propelled automobile and is preferably configured to drive on a road. For example, the vehicle 10 comprises an engine and/or an electric motor for driving wheels of the vehicle 10.

The server 12 may be a computer or computer system which allows access to its storage. The server 12 may store map data indicating a map of drivable roads on which the vehicle 10 or the other vehicles 14 can drive. The server 12 can be configured to update the map data. The update of the map data can be achieved by external input and/or the server 12 may receive updated map data from the vehicle 10 and/or the other vehicles 14 via the network 16.

The other vehicles 14 may drive on the same road as the vehicle 10. The other vehicles may be of the same type or model as the vehicle 10 or of a different type or model. The network 16 may include a mobile communication network and/or a wireless local area network (WLAN).

The vehicle 10 includes an optical sensing device 20, a localization device 22, a control device 24, a communication device 26, and/or a drive device 30. The optical sensing device 20, the localization device 22, the control device 24, the communication device 26, and/or the drive device 30 are communicatively and/or electronically connected to each other in order to exchange data or other types of information.

The optical sensing device 20 may include one or more cameras, a LIDAR device, and/or a radar device. The camera may be a stereo camera. The optical sensing device 20 is capable of imaging the surroundings of the vehicle 10. In particular, the optical sensing device 20 is configured to provide a 3D representation of the surroundings of the vehicle 10. The optical sensing device 20 outputs the surroundings of the vehicle 10 as image data and/or geometric data.

The localization device 22 may be a device for determining the position of the vehicle 10. The localization device 22 can be a GPS (Global Positioning System) transceiver. The localization device 22 is configured to output the position of the vehicle 10 as localization data.

The control device 24 includes (mechanical) components of the vehicle 10 which needed to be controlled for driving or navigating the vehicle 10. The control device 24 may include a steering device, a throttle device (also referred to as an acceleration device), and braking device for driving the vehicle 10 on the drivable road.

The steering device can be part of the vehicle 10 to adjust the direction or heading of the vehicle 10. The throttle device may also be a part of the vehicle 10 to control the speed of the motor or engine that in tum controls the speed and acceleration of the vehicle 10. The braking device can be part of the vehicle 10 to decelerate the vehicle 10 by providing friction to slow the wheels or tires of the vehicle 10. The steering device, the throttle device and the breaking device may be controlled based on the signals output by a control part 34.

The communication device 26 may be any component which allows communication of the vehicle 10 via the network 16. The communication device 26 may include a wired or wireless transceiver for exchanging data with the network 16. The communication device 26 may be considered an interface via which the vehicle 10 can communicate with the server 12. The communication device 26 may also facilitate communication directly with the other vehicles 14.

The drive device 30 can be considered a computer or computer system including a plurality of processors (not shown in the figures) and a storage device 33. The drive device 30 is configured to execute a plurality of algorithms which may be stored in the storage device 33. The plurality of algorithms processed by the drive device 30 allow to autonomously and/or semi-autonomously navigate the vehicle 10. The drive device 30 may be considered an autopilot or a drive assistance system of the vehicle 10.

To this end, the drive device 30 can perform various functionalities which can be associated to a drivable road detection part 32 and/or the control part 34. Each of these parts can be considered a section or functional unit of the drive device 30 which executes particular algorithms to achieve the autonomous and/or semi-autonomous navigation of the vehicle 10. The drivable road detection part 32 can include a map based drivable road detection part 32a, a likelihood computing part 32b, an optical sensor based drivable road detection part 32c, and/or a fusing part 32d. Therefore, the parts 32, (in particular parts 32a, 32b, 32c and/or 32d), and/or 34 can be considered implementations of a computer software or program.

The algorithms or instructions for the parts 32, 32a, 32b, 32c, 32d, and/or 34 can be stored in the storage device 33. The drive device 30 can receive the localization data from the localization device 22 via a localization input port 35. Similarly, the drive device 30 can receive the image data and/or the geometric data from the optical sensing device 20 via an optical input port 36. The localization input port 35 and/or the optical input port 36 can be considered interfaces which allow communication of the drive device 30 with the localization device 22 and the optical sensing device 20, respectively.

The map based drivable road detection part 32a is configured to receive the map data from the storage device 33 and the localization data from the localization device 22 via the localization input port 35.

The map based drivable road detection part 32a is further configured to create a first occupancy grid based on the map data and/or localization data. The first occupancy grid is a representation of the surroundings of the vehicle 10 and includes a plurality of cells each of which are associated with a first confidence of the surrounding environment being drivable. Therefore, the first confidence of each cell of the first occupancy grid indicates a how likely the area in the real world corresponding to the cell of the first occupancy grid is drivable. The first confidences can be considered a likelihood $p(M_{x,y})$. Thus, $p(M_{x,y})$ is a relationship, table or the like which links the confidence p to each cell $M_{x,y}$, whereby *x,y* denote the individual cell indexes of the occupancy grid.

The map based drivable road detection part 32a generates a grid including a plurality of cells $M_{x,y}$ whereby each cell corresponds to a particular area of the surrounding of the vehicle 10. The map based drivable road detection part 32a then associates each cell $M_{x,y}$ with a confidence p how likely the area in the real world corresponding to the respective cell is drivable or not. This association results in the first occupancy grid $p(M_{x,y})$.

The likelihood $p(M_{x,y})$ is calculated or determined based on the localization accuracy of the localization data determined by the localization device 22 and/or on the last update date of the map data. The lower the localization accuracy of the localization data is, the lower is the likelihood $p(M_{x,y})$ that the area of the real world corresponding to a particular cell is drivable. Similarly, the likelihood $p(M_{x,y})$ that the area of the real world corresponding to a particular cell is drivable is smaller the further in the past the last update to the map data was made. The relationship between the localization accuracy and/or the time of the last update on the one hand and likelihood $p(M_{x,y})$ can be a mathematical function, a table or any other type of relationship that can be stored within the storage device 33.

The optical sensor based drivable road detection part 32c is configured to receive the image data and/or the geometric data from the optical sensing device 20 via the localization input port 35. The optical sensor based drivable road detection part 32c is further configured to create a second occupancy grid based on the image data and/or the geometric data. The second occupancy grid is a representation of the surroundings of the vehicle 10 and includes a plurality of cells each of which are associated with a second confidence of the surrounding environment being drivable. Therefore, each cell of the second occupancy grid indicates a how likely the area in the real world corresponding to the cell of the second occupancy grid is drivable. The second confidences can be considered a likelihood $p(AI_{x,y})$. Thus, $p(AI_{x,y})$ is a relationship, table or the like which links the confidences p to each cell $AI_{x,y}$, whereby *x,y* denote the individual cell indexes of the occupancy grid.

The optical sensor based drivable road detection part 32c thus generates a grid including a plurality of cells $AI_{x,y}$ whereby each cell corresponds to a particular area of the surrounding of the vehicle 10. The optical sensor based drivable road detection part 32c then associates each cell $M_{x,y}$ with a confidence p how likely the area in the real world corresponding to the respective cell is drivable or not. This association gives the second occupancy grid $p(AI_{x,y})$.

The likelihood $p(AI_{x,y})$ is calculated or computed based on the image data and/or the geometric data using a neural network or other forms of artificial intelligence (AI). Techniques known to the skilled person can be used to determine the second occupancy grid $p(AI_{x,y})$.

The likelihood computing part 32b compute or calculates the likelihood $p(AI_{x,y} \mid M_{x,y})$ using well known map-matching algorithms such as Iterative Closest Point (ICP) and Normal Distributions Transform (NDT). The likelihood $p(AI_{x,y} \mid M_{x,y})$ indicates how true or likely is the observation $p(AI_{x,y})$ in view of the likelihood $p(M_{x,y})$. The likelihood $p(AI_{x,y} \mid M_{x,y})$ is inversely proportional to the uncertainty of the map-matching results. The uncertainty could be estimated from the covariance matrix of the map-matching algorithm..

The fusing part 32d fuses the first occupancy grid and the second occupancy grid to create a new third occupancy grid. Each cell of the third occupancy grid is associated with a third confidence that an area in the real world corresponding to this cell is drivable or not. In particular, the fusing part 32d fuses the first confidence of each cell of the first occupancy group with the second confidence of the corresponding cell of the second occupancy grid.

The third confidence is a likelihood $p(p(AI_{x,y}); p(M_{x,y}))$ how likely an area in the real world corresponding to a respective cell is drivable or not. The likelihood $p(p(AI_{x,y}); p(M_{x,y}))$ depends on the likelihoods $p(M_{x,y})$, $p(AI_{x,y})$, and/or $p(AI_{x,y} \mid M_{x,y})$.

In one embodiment, the fusion of the first occupancy group at the second occupancy grid to create the third occupancy grid is done using the following formula:

$$p\big(p(M_{x,y}); \ p(AI_{x,y})\big) = \ p\big(M_{x,y}\big|AI_{x,y}\big) = \frac{p\big(AI_{x,y}\big|M_{x,y}\big)\,p(M_{x,y})}{p(AI_{x,y})}$$

This formula is based on the Bayes rule and corresponds to a probabilistic fusion approach.

In another environment, the fusion of the first occupancy group at the second occupancy grid to create the third occupancy grid is done using the following formula:

$$p\big(p(M_{x,y}); \ p(AI_{x,y})\big) = \frac{p\big(AI_{x,y}\big) + \ p(M_{x,y})}{2}$$

In this embodiment, the likelihood $p(p(AI_{x,y}); p(M_{x,y}))$ is the average of $p(M_{x,y})$ and $p(AI_{x,y})$. In this case, the likelihood $p(AI_{x,y}|M_{x,y})$ is not needed such that the likelihood computing part 32b can be omitted. This formula corresponds to a deterministic fusion approach.

The fusing part 32d may include a grid resolution updating part 32d1 and/or a dealing part 32d2. The grid resolution updating part 32d1 deals with the situation that the resolution of the first occupancy grid and the second occupancy grid do not match each other. This means that a cell in one of the two occupancy grids does not have a counterpart in the other one of the two occupancy grids. In other words, a particular area in the real world does not have a corresponding cell in both the first occupancy grid and the second occupancy grid.

These differences in resolution may be based in the different coarsenesses of the image data, the geometric data the localization data, and the map data. In this case, it is not possible to fuse each cell of the first occupancy grid with the corresponding cell of the second occupancy grid. In order to align the number of cells in one of the two occupancy grids with the number of cells in the other of the two occupancy grids, the occupancy grid with the lower resolution (lower number of cells) is processed by the grid resolution updating part 32d1. In particular, the grid resolution updating part 32d1 divides cells into sub-cells to increase the resolution. The confidence of the sub-cells may be chosen to correspond the confidence of the divided cell. However, interpolation techniques or averaging techniques may be used to assign a confidence to the sub-cells. The fusing part 32d fuses the two occupancy grids based on the occupancy grid updated by the grid resolution updating part 32d1.

The dealing part 32d2 is active in situations in which particular cells of the first occupancy grid and/or the second occupancy grid cannot be attributed with a corresponding confidence. Reasons for this may be artefacts in the determination of the image data, the geometric data, the map data and/or errors in the processing of the first and second confidences. The dealing part 32d2 sets the missing confidences to a predetermined value between the minimum value and the maximum value of the confidence. In an optional embodiment, the dealing part 32d2 sets the predetermined value to an average of the maximum value and the minimum value. The minimum value may be zero indicating that the area in the real world is not drivable; the maximum value may be one indicating that the area in the real world is drivable with 100% confidence.

The control part 34 may include known neural networks or other types of known artificial intelligence (AI) to generate driving signals for navigating the vehicle 10. The driving system may be used for automated driving and/or assisted driving (semi-automated driving). The control part 34 can include an output port for out putting driving signals to the control device 24 which controls the steering device, the throttle device, and/or the braking device based on the driving signals.

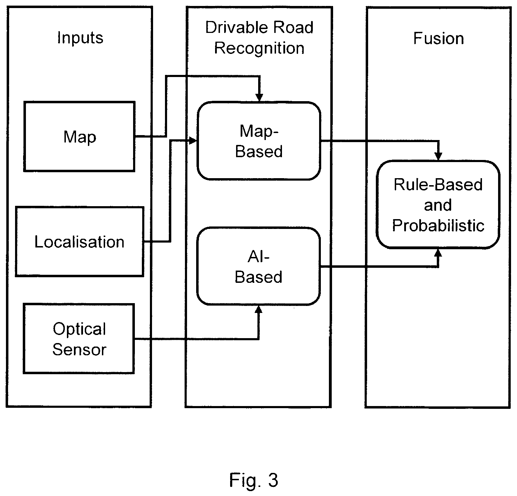

A method for autonomously and/or semi-autonomously navigating a vehicle 10 will be described in conjunction with Fig. 3.

A first step is a map-based detection step. The drivable road ahead of the vehicle 10 is detected given the information about the localisation of the vehicle 10 using the localisation device 22 (e.g. GPS) and map data retrieved from the storage device 33. The confidence of the map-based drivable road detection $p(M_{x,y})$ could be a function of the localisation accuracy and map update date. The resulting drivable road is represented in the form of a first occupancy grid with predefined dimensions and resolution. Each cell of the first occupancy grid represents the likelihood of the surrounding environment being drivable (e.g. 0 not drivable, 0.5 drivable with 50% confidence, 1 drivable with 100% confidence).

A second step is an AI-based detection step which may be executed in parallel to the first step. The drivable road ahead of the vehicle 10 is detected in real-time using the optical sensing device 20 (e.g. a camera) and an AI for semantic segmentation executed by the optical sensor based drivable road detection part 32c. The confidence of the drivable road detection $p(AI_{x,y})$ is a function of the AI uncertainty (e.g. Bayesian Neural Networks). The resulting drivable road is represented in the form of a second occupancy grid with predefined dimensions and resolution. Each cell of the second occupancy grid represents the likelihood of the surrounding environment being drivable (0 not drivable, 0.5 drivable with 50% confidence, 1 drivable with 100% confidence).

A third step is a grid dimensions and resolution updates step. In order to be able to fuse the first occupancy grid and the second occupancy grid, it needs to be ensured that the dimensions and resolutions of the occupancy grids are the same. The lower resolution occupancy grid is modified (e.g. using interpolation) to match the number of cells per meter of the higher resolution occupancy grid. The occupancy grid with the larger dimensions may be cropped to match the occupancy grid with smaller dimensions. This is executed by the grid resolution updating part 32d1. In addition, the dealing part 32d2 fills in missing confidences in the first occupancy grid and/or the second occupancy grid, if necessary.

A fourth step is a likelihood of AI being true step. The likelihood $p(AI_{x,y} \mid M_{x,y})$ of the AI drivable road detection $p(AI_{x,y})$ being true is computed given the map-based detection $p(M_{x,y})$ using well known map-matching algorithmic approaches such as ICP and NDT. The likelihood $p(AI_{x,y} \mid M_{x,y})$ is inversely proportional to the matching error which one of the outputs of the map-matching algorithms. This is executed by the likelihood computing part 32b.

A fifth step is a final outcome step. The final output of the fusion process if the new belief $p(M_{x,y} \mid AI_{x,y})$ of the drivable road detection using the Bayes rule. This is a probabilistic fusion approach. A simpler alternative would be to fuse by computing the average confidence of the map-based $p(M_{x,y})$ and AI-based $p(AI_{x,y})$ detection. This is a deterministic fusion approach.

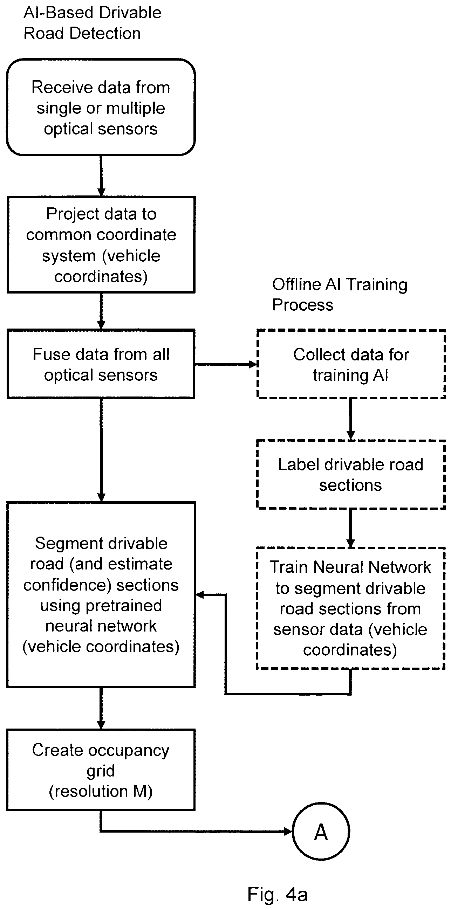

The method for autonomously and/or semi-autonomously navigating a vehicle 10 of Fig. 3 will be described in more detail in conjunction with Figs. 4a to 4c.

Fig. 4a describes the second step as described above. At first, image data and/or the geometric data is received from the optical sensing device 20. The image data and/or the geometric data are data that allow to generate a 3-dimensional image of the surrounding of the vehicle 10. The image data or the three-dimensional image of the surrounding of the vehicle 10 is then projected to a common coordinate system, such as the coordinate system of the vehicle 10. If the optical sensing device 20 includes a plurality of optical sensors generating image data and/or the geometric data (for example, a stereo camera and LIDAR device), the image data and/or the geometric data of the respective optical sensors are fused into a common 3-dimensional representation of the surroundings of the vehicle 10 in a comment coordinate system. To this end, the different types of image data and/or geometric data are fused using interpolation, averaging, and/or other types of fusion techniques such that the fused image data and/or geometric data in the common coordinate system have the same resolution and dimensions.

In a next step, the fused image data and/or geometric data are segmented in drivable road sections and non-drivable road sections using a pretrained neural network. Thereby, each section is associated with an estimate confidence how likely each section is drivable or not. This is done in the common coordinate system.

Thereafter, a second occupancy grid having the resolution M is created which includes a plurality of cells each associated with a confidence or likelihood when the section of the road corresponding to the cell is drivable or not.

In a separate optional step, the fused image data and/or geometric data from all sensors may be collected for training the neural network. The drivable road sections are labelled accordingly which is fed into a training session of the neural network to segment drivable road sections from the sensor data in the common coordinate system.

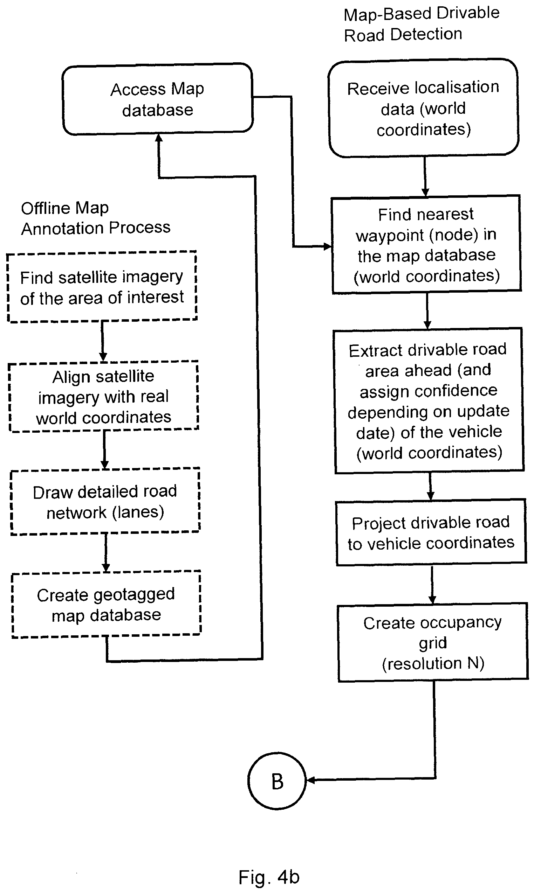

Fig. 4b describes the first step as described above. At first, localization data is received from the localization device 22. The localization data are in world coordinates, i.e. not in the common coordinate system. At the same time, the storage device 33 is accessed to receive the map data. The map data also are in world coordinates, i.e. not in the common coordinate system.

In an optional offline process, satellite images of the area of interest are found and these satellite images are each aligned with real world coordinates. Then, detailed road network is drawn in the satellite images in order to create a geotagged map database.

The localization data are used in order to find the nearest waypoint or node in the map database. This is still done in the world coordinates. Based on the selected node, the drivable road in the area ahead of the node (i.e. ahead of the vehicle 10) is extracted and a confidence is assigned to each section of the drivable road. Since this step is still done in the world coordinates, as a next step, the drivable road is projected to the common coordinate system, i.e. the vehicle coordinate system. A second occupancy grid having the resolution N is created based on the projected drivable road.

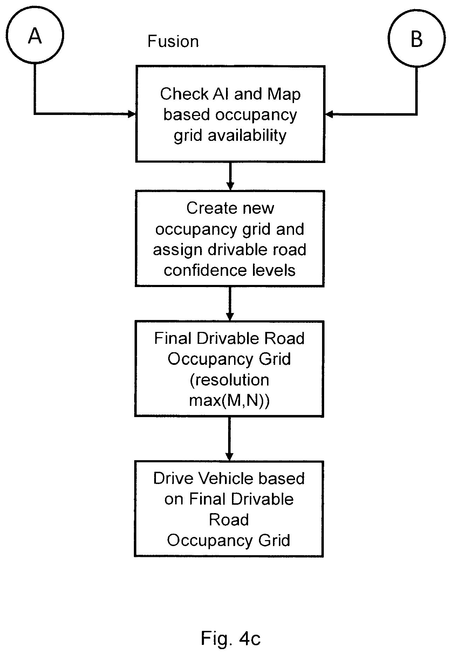

Fig. 4c describes the third to fifth step as described above. In the first step, it is checked whether the first occupancy grid having the resolution N and the second occupancy grid having the resolution M include cells which do not have an associated confidence or likelihood that the road is drivable. If so, the missing confidences could be assigned to be the average between the minimum value and the maximum value, for example 0.5. In addition, it is checked whether the resolution and dimensions of the first occupancy grid and the second occupancy grid match each other. If not, the resolution and/or the dimension of the occupancy grid having the higher resolution and/or the larger dimension are cropped. Alternatively or additionally, the resolution of the occupancy grid having the lower resolution is increased by dividing cells into sub-cells. The confidences of the sub-cells are set with reference to the confidence of the divided cell and/or to the confidence of the cells adjacent to the divided cell.

Thereafter, a new third occupancy grid is created by fusing the first occupancy grid and the second occupancy grid. Each cell of the third occupancy group has a third confidence that created by fusing the respective first confidence and the respective second confidence. The fusion methods are described above. The 3rd occupancy grid has a resolution which is the maximum of the first resolution N and the second resolution M.

In a finals optional step, the vehicle 10 is navigated based on the third occupancy grid.

**Claims**

1. A drive device for automated driving and/or assisted driving of a vehicle (10), comprising

   a storage device (33) configured to store map data,
   a localization input port (35) configured to receive localization data of the vehicle (10),
   an optical input port (36) configured to receive image data and/or geometric data indicating a surrounding of the vehicle (10), and
   a drivable road detection part (32) including a map based drivable road detection part (32a) that is configured to receive the map data from the storage device (33) and the localization data from the localization input port (35), and to create a first occupancy grid, each cell of which represents a first confidence of surrounding environment being drivable, based on the map data and/or localization data,
   wherein the drivable road detection part (32) further includes an optical sensor based drivable road detection part (32c) that is configured to receive the image data and/or the geometric data from the optical input port (36) and to create a second occupancy grid, each cell of which represents a second confidence of surrounding environment being drivable, based on the image data and/or the geometric data,
   wherein the drivable road detection part (32) includes a fusing part (32d) that is configured to create a third occupancy grid, each cell of which represents a third confidence of surrounding environment being drivable, by fusing the first occupancy grid and the second occupancy grid, and
   wherein the drive device (30) includes a control part (34) configured to generate driving signals for automated driving and/or assisted driving based on the third occupancy grid, the driving signals being output to the vehicle (10).

2. A vehicle, comprising

   a storage device (33) configured to store map data,
   a localization device (22) configured to output localization data of the vehicle (10),
   an optical sensing device (20) configured to output image data and/or geometric data indicating a surrounding of the vehicle (10), and
   a drivable road detection part (32) including a map based drivable road detection part (32a) that is configured to receive the map data from the storage device (33) and the localization data from the localization device (22), and to create a first occupancy grid, each cell of which represents a first confidence of surrounding environment being drivable, based on the map data and/or localization data,
   wherein the drivable road detection part (32) further includes an optical sensor based drivable road detection part (32c) that is configured to receive the image data and/or the geometric data from the optical sensing device (20) and to create a second occupancy grid, each cell of which represents a second confidence of surrounding environment being drivable, based on the image data and/or the geometric data,
   wherein the drivable road detection part (32) includes a fusing part (32d) that is configured to create a third occupancy grid, each cell of which represents a third confidence of surrounding environment being drivable, by fusing the first occupancy grid and the second occupancy grid, and
   wherein the vehicle (10) includes a control part (34) configured to drive the vehicle (10) in an automated driving mode and/or assisted driving mode based on the third occupancy grid.

3. The drive device or the vehicle according to claims 1 or 2, wherein the map based drivable road detection part (32a) is configured to create the first confidence calculated based on a localization accuracy of the localization data and an update date of the map data, and
   wherein the optical sensor based drivable road detection part (32c) is configured to create the second confidence based on an uncertainty of processing a semantic segmentation of the image data.

4. The drive device or the vehicle according to any one of the preceding claims, wherein a first resolution of the first occupancy grid is different from a second resolution of the second occupancy grid,

wherein the fusing part (32d) further includes a grid resolution updating part (32d1) that is configured to modify the lower one of the first or the second occupancy grids so as to match the resolution of the higher one of the first and second occupancy grids, and

wherein the fusing part (32d) is configured to fuse the first and second occupancy grids modified by the grid resolution updating part (32d1).

5. The drive device or the vehicle according to claim 4, wherein the first resolution of the first occupancy grid is lower than the second resolution of the second occupancy grid, and

wherein the grid resolution updating part (32d1) is configured to modify the first resolution of the first occupancy grid so as to match the second resolution of the second occupancy grid.

6. The drive device or the vehicle according to any one of the preceding claims, wherein missing values of the first and second confidences are set between a maximum value of the first and second confidences and a minimum value of the first and second confidences, and

wherein the fusing part (32d) further includes a dealing part (32d2) configured to set the first or second missing confidence values to a predetermined value between the maximum value and the minimum value.

7. The drive device or the vehicle according to claim 6, wherein the predetermined value is an average of the maximum value and the minimum value.

8. The drive device or the vehicle according to any one of the preceding claims, wherein the fusing part (32d) is configured to create the third occupancy grid by computing the average of the first and second confidences.

9. The drive device or the vehicle according to any one of claims 1 to 7, the fusing part (32d) is configured to create the third occupancy grid by using Bayes rule, and

wherein the drivable road detection part (32) further includes a likelihood computing part (32b) that is configured to compute a likelihood of the second confidence being true by using map-matching algorithms with the first occupancy grid.

10. A computer-implemented method for driving a vehicle (10) in an automated mode and/or driving assistance mode, comprising the steps of:

generating localization data of the vehicle (10) using a localization device (22),

generating image data and/or geometric data indicating a surrounding of the vehicle (10) using an optical sensing device (20),

receiving map data from a storage device (33) and the localization data from the localisation device, and creating a first occupancy grid, each cell of which represents a first confidence of surrounding environment being drivable, based on the map data and/or the localization data,

receiving the image data and/or the geometric data from the optical sensing device (20) and creating a second occupancy grid, each cell of which represents a second confidence of surrounding environment being drivable, based on the image data and/or the geometric data,

creating a third occupancy grid, each cell of which represents a third confidence of surrounding environment being drivable, by fusing the first occupancy grid and the second occupancy grid, and

driving the vehicle (10) based on the third occupancy grid.

11. The method according to claim 10, wherein the step of creating the first occupancy grid includes creating the first confidence calculated based on a localization accuracy of the localization data and an update date of the map data, and

wherein the step of creating the second occupancy grid includes creating the second confidence calculated based on an uncertainty of processing a semantic segmentation of the image data.

12. The method according to claims 10 or 11, wherein a first resolution of the first occupancy grid is different from a second resolution of the second occupancy grid, wherein the step of creating a third occupancy grid includes modifying the lower one of the first or the second occupancy grids so as to match the resolution of the higher one of the first and second occupancy grids using a grid resolution updating part (32d1), and

wherein the step of creating a third occupancy grid further includes fusing the first and second occupancy grids modified by the grid resolution updating part (32d1).

13. The method according to claim 12, wherein the first resolution of the first occupancy grid is lower than the second resolution of the second occupancy grid, and
wherein the step of creating a third occupancy grid includes modifying the first resolution of the first occupancy grid so as to match the second resolution of the second occupancy grid.

14. The method according to any of the claims 10 to 13, wherein the step of creating a third occupancy grid further includes creating the third occupancy grid by computing the average of the first and second confidences.

15. The method according to any of the claims 10 to 13, wherein the step of creating a third occupancy grid further includes creating the third occupancy grid by using Bayes rule, and
wherein the step of creating a first occupancy grid further includes computing a likelihood of the second confidence being true by using map-matching algorithms with the first occupancy grid.

| Drive Device 30 | Localization Device 22 |
|---|---|
| Optical Sensing Device 20 | Control Device 24 |
| | Communication Device 26 |

Vehicle 10

Server 12

Other vehicle 14

Network 16

**Fig. 1**

Drivable Road Detection Part 32

Map Based Drivable Road Detection Part 32a

Likelihood Computing Part 32b

Optical Sensor Based Drivable Road Detection Part 32c

Fusing Part 32d

Grid Resolution Updating Part 32d1

Dealing Part 32d2

Storage Device 33

Control Part 34

Localization Input Port 35

Optical Input Port 36

**Fig. 2**

Fig. 3

AI-Based Drivable
Road Detection

Receive data from
single or multiple
optical sensors

Project data to
common coordinate
system (vehicle
coordinates)

Offline AI Training
Process

Fuse data from all
optical sensors

Collect data for
training AI

Label drivable road
sections

Segment drivable
road (and estimate
confidence) sections
using pretrained
neural network
(vehicle coordinates)

Train Neural Network
to segment drivable
road sections from
sensor data (vehicle
coordinates)

Create occupancy
grid
(resolution M)

A

Fig. 4a

Map-Based Drivable
Road Detection

Access Map
database

Receive localisation
data (world
coordinates)

Offline Map
Annotation Process

Find satellite imagery
of the area of interest

Align satellite
imagery with real
world coordinates

Draw detailed road
network (lanes)

Create geotagged
map database

Find nearest
waypoint (node) in
the map database
(world coordinates)

Extract drivable road
area ahead (and
assign confidence
depending on update
date) of the vehicle
(world coordinates)

Project drivable road
to vehicle coordinates

Create occupancy
grid
(resolution N)

B

Fig. 4b

Fig. 4c

Europäisches Patentamt
European Patent Office
Office européen des brevets

# EUROPEAN SEARCH REPORT

Application Number

EP 21 38 6049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/131823 A1 (GIORGIO GIUSEPPE [IT] ET AL) 6 May 2021 (2021-05-06)<br>* paragraphs [0039] – [0041], [0045], [0047], [0056], [0057], [0108], [0112], [0123] – [0127], [0187], [0188], [0195] – [0200] *<br>* paragraph [0229] * | 1-15 | INV.<br>G01C21/00<br>G01S17/04<br>G01S17/86<br>G01S17/89 |
| A | US 2018/373941 A1 (KWANT RICHARD [US] ET AL) 27 December 2018 (2018-12-27)<br>* paragraphs [0039], [0042] * | 3,11 | |
| A | US 2021/063200 A1 (KROEPFL MICHAEL [US] ET AL) 4 March 2021 (2021-03-04)<br>* paragraph [0117] * | 6,7 | |

TECHNICAL FIELDS
SEARCHED (IPC)

G01C
G01S

The present search report has been drawn up for all claims

| Place of search | Date of completion of the search | Examiner |
|---|---|---|
| The Hague | 27 January 2022 | Nikoli, Revekka |

EPO FORM 1503 03.82 (P04C01)

## EP 4 134 623 A1

### ANNEX TO THE EUROPEAN SEARCH REPORT
### ON EUROPEAN PATENT APPLICATION NO.

EP 21 38 6049

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2022

| Patent document cited in search report | | Publication date | Patent family member(s) | | Publication date |
|---|---|---|---|---|---|
| US 2021131823 | A1 | 06-05-2021 | CN | 112313477 A | 02-02-2021 |
| | | | EP | 3811029 A1 | 28-04-2021 |
| | | | JP | 2021527863 A | 14-10-2021 |
| | | | US | 2021131823 A1 | 06-05-2021 |
| | | | WO | 2019244060 A1 | 26-12-2019 |
| US 2018373941 | A1 | 27-12-2018 | NONE | | |
| US 2021063200 | A1 | 04-03-2021 | US | 2021063198 A1 | 04-03-2021 |
| | | | US | 2021063199 A1 | 04-03-2021 |
| | | | US | 2021063200 A1 | 04-03-2021 |
| | | | WO | 2021042051 A1 | 04-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190078896 A1
- US 20170297571 A1
- US 20190384304 A1
- US 20200160068 A1
- US 20160061612 A1
- US 20200183011 A1

**Non-patent literature cited in the description**

- Taxonomy and Definitions for Terms Related to Driving Automation Systems for On-Road Motor Vehicles. *SAE International, an automotive standardization body,* 2021